(19) Europäisches Patentamt
European Patent Office
Office européen des brevets

(11) **EP 3 224 159 B1**

(12) **FASCICULE DE BREVET EUROPEEN**

(45) Date de publication et mention
de la délivrance du brevet:
**12.12.2018 Bulletin 2018/50**

(21) Numéro de dépôt: **15800815.1**

(22) Date de dépôt: **24.11.2015**

(51) Int Cl.:
**B65D 88/68** (2006.01)    **B65G 65/48** (2006.01)
**G21C 21/02** (2006.01)    **G21C 3/04** (2006.01)

(86) Numéro de dépôt international:
**PCT/EP2015/077561**

(87) Numéro de publication internationale:
**WO 2016/083413 (02.06.2016 Gazette 2016/22)**

(54) **DISPOSITIF DE TRANSFERT DE POUDRE A ECOULEMENT AMELIORE**

PULVERTRANSFERVORRICHTUNG MIT VERBESSERTEM FLUSS

POWDER-TRANSFER DEVICE WITH IMPROVED FLOW

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.11.2014 FR 1461431**

(43) Date de publication de la demande:
**04.10.2017 Bulletin 2017/40**

(73) Titulaire: **COMMISSARIAT À L'ÉNERGIE
ATOMIQUE ET AUX
ÉNERGIES ALTERNATIVES
75015 Paris (FR)**

(72) Inventeurs:
• **BENEDETTI, Arnaud**
  **F-75015 Paris (FR)**
• **SORNAY, Philippe**
  **F-04100 Manosque (FR)**
• **BROTHIER, Méryl**
  **F-13090 Aix En Provence (FR)**

(74) Mandataire: **Brevalex
95, rue d'Amsterdam
75378 Paris Cedex 8 (FR)**

(56) Documents cités:
**FR-A1- 2 993 195        US-A1- 2009 256 271
US-A1- 2014 048 172**

**Description**

**DOMAINE TECHNIQUE ET ÉTAT DE LA TECHNIQUE ANTÉRIEURE**

La présente invention se rapporte à un dispositif de transfert de poudre ou mélanges de poudre offrant un écoulement amélioré.

Dans la présente demande, on entend par "poudre" un milieu granulaire composé de particules granulaires présentant un diamètre compris entre 1 nm et plusieurs dizaines de centimètres.

Dans le domaine nucléaire, la fabrication de combustible nucléaire sous la forme de pastille à base d'oxyde d'uranium ou d'un mélange d'oxyde d'uranium et de plutonium destinés aux réacteurs nucléaires repose sur un procédé de métallurgie des poudres.

Ce procédé comporte trois étapes: la préparation de la poudre, la compaction de la poudre selon un objet de forme souhaitée et la consolidation de cet objet par traitement thermique.

Jusqu'à l'opération de mise en forme par compaction, l'oxyde (les oxydes) d'actinide(s) est (sont) sous forme pulvérulente et est (sont) transféré(s) dans différentes trémies pour alimenter les équipements nécessaires à la préparation du milieu granulaire qui est compacté. Le dernier équipement alimenté avec de la poudre étant le moule de presse dans lequel la poudre est compactée.

Or, la vidange des trémies est souvent problématique. Dans certains cas, des arches ou de voûtes se forment lors du remplissage des trémies ou lors de leur vidange qui réduisent la vitesse d'écoulement en la faisant fluctuer, voire qui stoppent ou empêchent l'écoulement des poudres. La formation de ces arches est fonction des propriétés de la poudre et en particulier de la capacité qu'à la poudre à se cisailler, du rapport entre la dimension des particules et la dimension de l'orifice de vidange de la trémie, de la forme de la trémie et du coefficient de frottement entre la poudre et les parois de la trémie.

Dans d'autres cas, les particules de très faibles tailles s'agglomèrent sous l'effet de forces électrostatiques, de Van der Waals ou de forces capillaires. Dans le cas d'une trémie d'alimentation, par exemple de moules d'une presse de combustible nucléaire, l'alimentation en poudre est discontinue et est interrompue pendant la compaction de la poudre et l'éjection de la pastille. La poudre doit donc passée d'un état où elle s'écoule à un état où elle ne s'écoule pas. Or le coefficient de frottement statique entre la trémie et la poudre est toujours supérieur au coefficient de frottement dynamique, il s'ensuit un retard à l'écoulement lorsque l'alimentation est souhaitée. Ce débit différé et fluctuant est très pénalisant pour le contrôle instantané de la matière sortant du conteneur ou pour la reproductibilité de remplissage de capacité comme les moules de presse. En particulier, ce comportement limite la vitesse de remplissage et l'homogénéité de remplissage des moules de presse et en conséquence les cadences de production et les rendements.

Des solutions techniques ont été proposées pour tenter d'améliorer l'écoulement de la poudre.

Par exemple, des systèmes mécaniques intrusifs comme des racleurs/"dévoûteurs" implantés au sein du lit de poudre peuvent être utilisés. D'une part, ces systèmes mécaniques peuvent ne pas être suffisants. D'autre part, un certain nombre d'inconvénients résulte de leur utilisation, notamment une maintenance et un nettoyage difficile. En outre, les systèmes mécaniques peuvent subir une usure par abrasion et provoquer la pollution de la poudre, par exemple lorsqu'il s'agit de mettre en oeuvre des poudres relativement abrasives comme les poudres d'actinides. En outre, ils peuvent altérer les agglomérats et changer notablement les caractéristiques de poudres. Par ailleurs, certaines conduites/trémies, de par leur géométrie et leurs dimensions peuvent ne pas permettre la mise en oeuvre de tels systèmes mécaniques.

Le document US2014/048172 décrit un dispositif pour délivrer un matériau particulaire vers un système de pesée. Le dispositif comporte une trémie et une goulotte à section en U connectée à la base de la trémie. La goulotte est inclinée par rapport à la verticale et est mobile angulairement autour de son axe et peut osciller sous l'action d'un moteur, afin de supprimer les agglomérats de poudre. Le problème d'apparition de voûtes dans la trémie n'est pas résolu.

Il existe également des systèmes de décolmatage de type pneumatique qui, par insufflation de gaz tentent de faciliter l'écoulement. La mise en oeuvre de tels systèmes sur des poudres denses induit des niveaux d'efficacité réduits. Par ailleurs, l'insufflation de gaz peut parfois provoquer un compactage du milieu granulaire ou au contraire des risques accrus de dispersion potentiellement pénalisante surtout pour des poudres contaminantes comme celles des actinides.

Il existe également des systèmes générant des vibrations sur la paroi de la trémie, par exemple, de type "pic vert" ou formés par des émetteurs d'ultrasons. Les ondes générées diminuent l'interaction entre la poudre et la paroi et perturbent l'empilement des particules de poudre. Or, si ces perturbations conduisent à rompre les arches, elles modifient également l'empilement conduisant à une augmentation de la compacité qui facilite la formation des arches. Si les vibrations sont trop fortes, le phénomène de formation d'arches due à l'augmentation de la compacité prédomine par rapport au phénomène de diminution de l'interaction entre la poudre et les parois. Si les vibrations sont trop faibles, elles n'ont aucun effet sur l'écoulement de la poudre. En général, le fonctionnement du système de type "pic vert" n'est pas continu car il génère des vibrations trop fortes entraînant un accroissement de la compacité. Les ultrasons, quant à eux, ont une action faible sur l'interaction entre la poudre et les parois. Ils sont alors, la plupart du temps associés à un (des) système(s) de type pic vert(s). Or, en fonctionnant de manière discontinue, le système de type "pic vert" entraine une fluctuation du débit de vidange qui est d'autant plus néfaste que le volume vidangé est faible.

## EXPOSÉ DE L'INVENTION

Le but de la présente invention est donc d'offrir un dispositif de transfert de poudre offrant un écoulement de poudre amélioré.

Le but précédemment énoncé est atteint par un dispositif de transfert de la poudre contenue dans un conteneur de forme axisymétrique qui comporte au moins un orifice de vidange, l'orifice de vidange étant dans une zone inférieure du conteneur en phase de vidange, le dispositif comportant des moyens de déplacement en rotation d'une partie mobile de la paroi du conteneur autour d'un axe sur lequel se situe l'orifice de vidange, lesdits moyens étant aptes à appliquer à la partie mobile de la paroi du conteneur au moins une accélération d'une valeur suffisante pour assurer un glissement continu de la poudre par rapport à la paroi du conteneur.

En d'autres termes, on assure un mouvement relatif entre la poudre et au moins une partie du conteneur de sorte que la poudre n'adhère pas à la paroi du conteneur évitant l'apparition d'appuis statiques sur lesquels pourraient reposer les voûtes. L'écoulement n'est alors pas bloqué par les voûtes. Le dispositif assure au moins pendant un certain temps un écoulement de la poudre.

Grâce à l'invention, on peut obtenir un débit de vidange constant quel que soit le volume vidangé.

En outre, contrairement l'application de vibration du conteneur par un système de type "pic vert", la mise en rotation du conteneur ne modifie pas l'empilement des particules de poudre, la compacité de la poudre n'est alors pas altérée ce qui permet d'obtenir un débit massique constant pendant tout l'écoulement.

Dans le cas de poudres s'écoulant naturellement, les moyens appliquent une accélération initiale suffisante pour assurer le glissement de la poudre par rapport au conteneur et ensuite maintiennent la rotation avantageusement à une vitesse de rotation constante pour assurer que la paroi du conteneur soit en mouvement permanent par rapport à la poudre. La poudre s'écoule alors dès que l'orifice de vidange est ouvert, l'écoulement en poudre se fait sans retard et le débit est sensiblement constant pendant toute la phase d'écoulement.

Dans le cas de poudres ne s'écoulant pas naturellement, l'accélération suffisante assure un cisaillement entre les particules proches de la paroi du conteneur et celles plus éloignés de la paroi, ce cisaillement conduit à une dilatance de la poudre qui provoque la rupture des arches, il en résulte un écoulement.

On peut prévoir que, lorsque l'écoulement s'interrompt du fait de reformations de voûtes, la rotation du conteneur est arrêtée et une nouvelle accélération est appliquée au conteneur pour de nouveau rompre les voûtes.

De manière très avantageuse, on peut prévoir que les moyens de déplacement en rotation du conteneur appliquent un déplacement en rotation dans un sens et dans l'autre de sorte à entretenir l'écoulement. Les moyens de déplacement imposent un mouvement d'oscillation du conteneur autour de l'axe de rotation. En effet, la mise en oeuvre d'un mouvement rotatif oscillant permet de supprimer les zones d'accroche statique entre la poudre et la paroi par variation de la vitesse relative entre la trémie et le milieu granulaire.

La présente invention a alors pour objet un dispositif de transfert d'une poudre donnée ou d'un mélange de poudres données contenu dans un conteneur, ledit conteneur comportant une paroi latérale et au moins un orifice de vidange, le conteneur de forme axisymétrique d'axe de révolution étant disposé dans le dispositif de transfert de sorte que son orifice de vidange soit situé dans une partie inférieure dudit conteneur, le dispositif de transfert comportant des moyens de déplacement en rotation du conteneur autour de son axe de révolution, sur lequel se situe l'orifice de vidange, et des moyens de commande des moyens de déplacement en rotation tels que les moyens de déplacement en rotation imposent à au moins une partie de la paroi latérale du conteneur, dite partie mobile, une première phase de déplacement dans laquelle une accélération supérieure ou égale à une accélération minimale apte à provoquer le glissement de la poudre par rapport à la partie mobile est appliquée à la partie mobile.

Dans manière très avantageuse, l'accélération minimale est supérieure ou égale au produit du coefficient de frottement statique, de la force exercée par la poudre sur la paroi latérale du conteneur et du rayon du conteneur divisé par le moment d'inertie de la poudre.

Dans un exemple de réalisation, les moyens de commande commandent les moyens de déplacement en rotation de sorte que, lors d'une deuxième phase après la première phase, ils maintiennent le déplacement en rotation de la partie mobile. De préférence, les moyens de commande sont tels que les moyens de déplacement en rotation déplacent la partie mobile à vitesse constante pendant la deuxième phase.

Dans un autre exemple de réalisation, les moyens de commande sont tels que les moyens de déplacement en rotation imposent à la partie mobile une succession de premières phases séparées par des phases à vitesse faible ou nulle. De préférence, les moyens de commande sont tels que les moyens de déplacement en rotation imposent un déplacement de la partie mobile de sorte que son sens de rotation est inversé entre deux premières phases successives, de sorte à imposer un mouvement rotatif oscillant. Avantageusement, le mouvement rotatif oscillant est périodique. Par exemple, le mouvement rotatif oscillant a une fréquence comprise entre 5 Hz et 50 Hz.

Le dispositif de transfert peut comporter des moyens d'étanchéité dynamique entre la partie mobile et des parties fixes du dispositif de transfert.

Par exemple, le conteneur est une trémie.

La présente invention a également pour objet un dispositif de fabrication d'éléments de combustible nucléaire comportant un dispositif de transfert de poudre selon l'invention, une presse munie d'une table dans laquelle au moins un moule est formé et des moyens pour compresser la poudre dans le moule, l'extrémité de vidange du conteneur étant apte à être mise en regard dudit moule lors d'une phase de remplissage du moule et à être obturée en dehors d'une phase de remplissage

La présente invention a également pour objet un procédé de transfert d'une poudre donnée ou d'un mélange de poudres données contenu dans un conteneur, comportant une paroi latérale et un orifice de vidange, ledit orifice de vidange étant disposé en position inférieure, le procédé comportant au moins l'étape:

a) mise en rotation d'une partie au moins de la paroi latérale du conteneur autour d'un axe sur lequel se trouve l'orifice de vidange avec une accélération supérieure à une accélération minimale provoquant le glissement de la poudre déterminée par rapport à la paroi latérale.

De préférence, l'accélération minimale est supérieure ou égale au produit du coefficient de frottement statique, de la force exercée par la poudre sur la paroi latérale du conteneur et du rayon du conteneur divisé par le moment d'inertie de la poudre.

Dans un exemple de réalisation, le procédé de transfert comporte une étape ultérieure b) de maintien du mouvement de rotation de la paroi latérale. Le mouvement de rotation se fait de préférence à vitesse constante.

Dans un autre exemple de réalisation, des étapes a) sont répétées successivement séparées par des étapes à vitesse nulle ou faible. Le sens de rotation peut être inversé entre deux étapes a) successives, avantageusement de manière périodique.

## BRÈVE DESCRIPTION DES DESSINS

La présente invention sera mieux comprise sur la base de la description qui va suivre et des dessins en annexe sur lesquels:

- la figure 1 est une représentation schématique d'un exemple de représentation d'un dispositif de transfert selon l'invention,
- la figure 2 est une représentation graphique de la force de frottement entre la poudre et la paroi d'une trémie en fonction de la force induite dans la poudre par la rotation de la paroi de la trémie,
- la figure 3 est une représentation graphique de vitesse linéique de la trémie en fonction selon deux modes de réalisation,
- la figure 4 est une représentation schématique d'un dispositif de fabrication de pastilles de combustible nucléaire mettant en oeuvre un dispositif de transfert de poudre selon la présente invention.

## EXPOSÉ DÉTAILLÉ DE MODES DE RÉALISATION PARTICULIERS

D'après la norme ISO 4490, une poudre s'écoule naturellement à travers un orifice si elle se met à couler au moment de l'ouverture de l'orifice.

L'invention porte sur un dispositif de transfert de poudre. Ce dispositif peut mettre en oeuvre une trémie destinée à remplir des récipients ou à alimenter une unité de fabrication utilisant une poudre telle que par exemple les moules pour réalisation des pastilles de combustible nucléaire. En variante, il peut mettre en oeuvre un récipient que l'on souhaite vidanger, celui-ci étant amovible par rapport au dispositif.

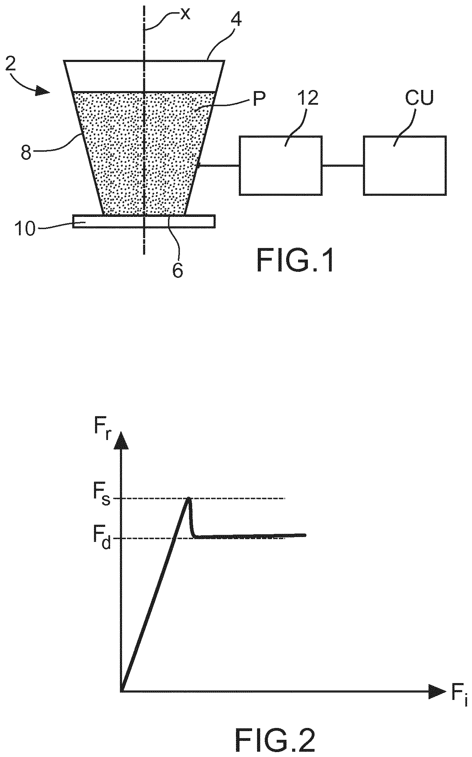

Sur la figure 1, on peut voir une représentation schématique d'un dispositif de transfert de poudre selon l'invention. Dans l'exemple décrit et non limitatif le dispositif de transfert comporte une trémie axisymétrique 2 comprenant une extrémité supérieure 4 par laquelle elle est alimentée en poudre P et une extrémité inférieure 6 par laquelle la poudre P est évacuée, et une paroi latérale 8 entre l'extrémité supérieure 4 et l'extrémité inférieure 6. La trémie comporte des moyens 10 pour obturer temporairement l'extrémité inférieure 6. La trémie 2 présente un axe de révolution X orienté verticalement dans la représentation de la figure 1.

Toute la trémie peut être mise en rotation.

Alternativement, seule une portion axiale de la trémie peut être mise en rotation, dans ce cas c'est de préférence une portion axiale située du côté de l'extrémité inférieure.

De préférence, des moyens d'étanchéité dynamique (non représentés) à la poudre sont prévus entre la trémie et les autres parties fixes ou alors entre la partie mobile de la trémie et la partie fixe de la trémie.

Le dispositif comporte également des moyens 12 pour déplacer la paroi latérale de la trémie en rotation autour de son axe X et des moyens de commande CU des moyens 12. Dans la présente demande, on entend par "rotation de la trémie" ou plus généralement "rotation du conteneur" un mouvement de la trémie ou du conteneur formé de tours complets ou d'un mouvement d'oscillation entre deux positions angulaires, étant entendu que les deux positions angulaires peuvent être séparées au plus de plus de 360°.

Les moyens CU commandant les moyens de déplacement 12 de sorte que l'accélération qu'ils appliquent à la trémie soit réglée à une valeur supérieure ou égale à une valeur minimale $a_{min}$ à autour de l'axe X et qu'ils entrainent ensuite la paroi latérale en rotation suivant une vitesse constante ou non.

La valeur minimale de l'accélération $a_{min}$ est choisie de sorte à provoquer un glissement d'au moins une partie de la poudre par rapport à la paroi latérale 8. L'accélération est telle qu'elle induit une force supérieure ou égale aux forces de frottement statiques entre la poudre et la paroi latérale.

Sur la figure 2, on peut voir la force de frottement Fs ou Fd et la force induite Fi par la rotation de la paroi de la trémie. $F_S$ est la force de frottement statique et $F_d$ est la force de frottement dynamique. On peut voir qu'au-delà d'une certaine valeur de force induite par la rotation de la paroi, la force de frottement est uniquement dynamique et est plus faible que la force de frottement statique, cette force n'empêchant pas l'écoulement.

En effet, avant la mise en mouvement relatif entre la poudre et la paroi de la trémie, les forces de frottement F entre la poudre et la paroi sont proportionnelles à la composante normale de la réaction (N) de la poudre sur la surface de la paroi. Le coefficient de proportionnalité est le coefficient de frottement apparent poudre/paroi ou coefficient de frottement statique $\mu_s$ qui dépend de plusieurs paramètres comme l'état de surface et la rugosité des solides en contact.

La valeur maximale du frottement est donnée par le coefficient de frottement statique connaissant la réaction normale de la paroi sur la poudre :

$$F_m = \mu_s \times N$$

D'une manière générale, le coefficient de frottement dynamique correspondant aux forces de frottements induites dans le cas où la poudre et la paroi sont en mouvement relatif l'une par rapport à l'autre. Ce coefficient notée $\mu_d$ est inférieur au coefficient $\mu_s$ de l'ordre de 10% à 20% généralement.

Le coefficient de frottement statique peut être défini comme suit :
$\mu_s = \tan\theta_s$ où $\theta_s$ représente l'angle par rapport à l'horizontal à partir duquel la poudre est sur le point de glisser sur la paroi.

Le coefficient de frottement dynamique peut être défini avec la même expression mais en faisant intervenir $\theta_d$ l'angle à partir duquel la poudre glisse continument sur la paroi.

Une poudre dans une trémie exerce de par son poids, une force contre les parois de celle-ci. L'accélération minimale de la trémie est choisie de sorte à être supérieure au produit du coefficient de frottement statique, de la force exercée par la poudre sur la paroi de la trémie et du rayon de la trémie divisé par le moment d'inertie de la poudre.

Pour une poudre d'$UO_2$ dans une colonne cylindrique de diamètre intérieur 10 cm contenant une hauteur de poudre supérieure à 15 cm, l'accélération relative doit être supérieure à 1,2 pour ne pas entrainer la poudre en rotation avec la conduite. Pour la même poudre d'$UO_2$ contenue dans une conduite de diamètre 8 mm inférieur au diamètre d'écoulement naturel de cette poudre qui est de 10 mm, l'accélération relative doit être supérieure à 5. On cherche à obtenir un déplacement entre la poudre et la paroi latérale supérieure à la taille des particules de poudre. Par exemple si les particules ont un diamètre de 100 $\mu$m, le déplacement peut être de 500 $\mu$m.

Cette accélération minimale induit donc un glissement de la poudre par rapport à la paroi latérale et un écoulement de la poudre.

Dans un mode de réalisation particulièrement adapté à la manipulation de poudre s'écoulant naturellement, les moyens de déplacement en rotation sont commandés de sorte que, après avoir appliqué une accélération minimale $a_{min}$, ils imposent à la paroi de la trémie une vitesse de rotation permanente, de préférence constante, et ceci quel que soit l'état d'obturation de l'orifice de vidange. En maintenant la rotation de la paroi latérale de la trémie, on maintient un mouvement relatif entre la poudre et la paroi latérale, seul le frottement dynamique entre la poudre et la paroi latérale est alors à considérer et ceci que l'orifice de vidange soit ouvert ou fermé. Le glissement entre la poudre et la paroi latérale est entretenu. Ainsi, tant que le glissement est entretenu, dès lors que l'orifice de vidange est ouvert, la poudre s'écoule instantanément avec un débit constant.

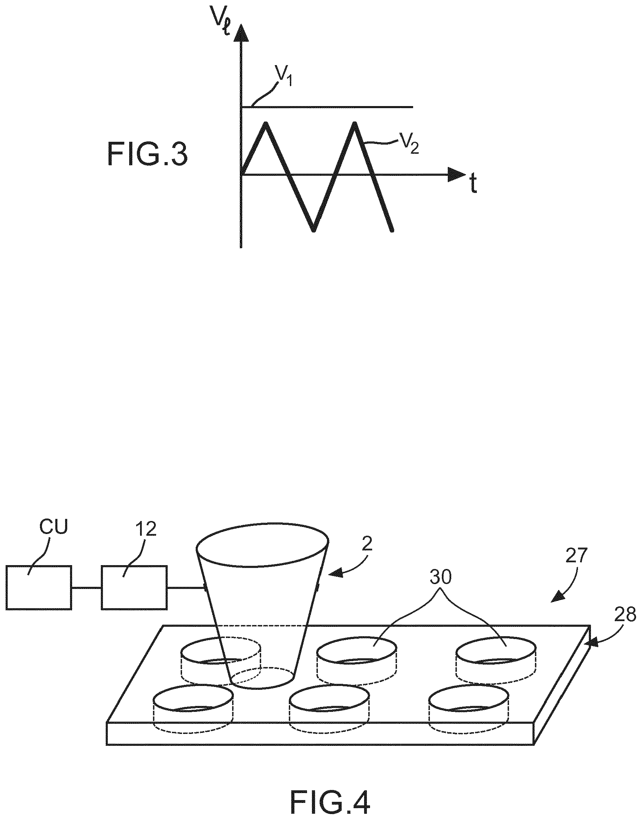

Sur la figure 3, on peut voir représenter la vitesse linéique VI en fonction du temps t pour deux exemples de mouvements pouvant être imposés au sous-ensemble trémie.

La vitesse désignée V1 désigne la vitesse linéique dans le cas d'un dispositif adapté à des poudres s'écoulant naturellement, la vitesse V1 est constante. En variante, la vitesse pourrait être variable de manière monotone ou non.

La vitesse désignée V2 désigne la vitesse dans le cas d'un dispositif adapté à des poudres ne s'écoulant pas naturellement, ce mode de fonctionnement sera décrit ci-dessous.

A partir d'une certaine accélération de la paroi latérale de la trémie, la poudre s'écoule. Puisque la vitesse de rotation ne peut être augmentée indéfiniment, le sens de rotation de la trémie est inversé. Le changement de sens de rotation induit un renversement du sens de cisaillement de la poudre proche de la surface de la trémie. Le coefficient de frottement va alors diminuer pour tendre vers zéro puis ré-augmenter. L'écoulement s'en trouve ainsi facilité. L'accélération augmente alors au-dessus de l'accélération minimale. De préférence, l'accélération relative est supérieure à 5 pour les poudres d'$UO_2$ ne s'écoulant pas naturellement afin d'obtenir un débit constant.

Dans un mode de réalisation particulièrement adapté à la manipulation des poudres ne s'écoulant pas naturellement, le mouvement de la trémie est intermittent avec des phases de rotation successives comportant un démarrage à une accélération $a_{min}$, une rotation dans un sens et un arrêt. Sur la figure 3, on peut voir un exemple de mouvement pouvant être imposé à la trémie, désigné par V2, qui est la vitesse linéique. Celle-ci est en dent de scie et change de signe périodiquement illustrant un changement de sens de rotation de la paroi latérale de la trémie. Ce mouvement est préféré mais n'est pas exclusif d'autres mouvements, tels que par exemple des mouvements non périodiques.

Le démarrage à une accélération $a_{min}$ provoque une rupture des arches qui s'étaient reformées. Une rotation de la trémie après la rupture des arches maintient l'écoulement tant que les arches ne se sont pas à nouveau reformées.

De manière très avantageuse, le sens de rotation de la paroi latérale est inversé à chaque phase de rotation. On applique donc un mouvement rotatif oscillant permettant de créer un cisaillement suffisant entre les particules proches de la paroi et celles plus éloignées. Ce cisaillement conduit à une dilatance de la poudre qui provoque la rupture des arches. Cette rupture permet l'écoulement de la poudre.

Plus particulièrement, le mouvement rotatif oscillant se décompose en deux phases :

Lorsque les arches se sont reformées, la poudre ne s'écoule plus.

Le sens de rotation de la trémie s'inverse. Les forces de frottement changent de sens. Toutefois, sous l'effet de l'inertie, la poudre tend à garder le même sens de rotation. Dans cette phase, la paroi latérale de la trémie et la poudre tournent en sens opposé. La poudre glisse sur la paroi latérale de la trémie et les contraintes engendrées entre les particules qui glissent tout en frottant sur la paroi latérale de la trémie et celles plus éloignées conduisent à un cisaillement intense local de la poudre. Ce cisaillement provoque une dilatance de la poudre au niveau de la paroi qui rompt les arches et permet ainsi l'écoulement. Lorsque les forces de frottement deviennent supérieures aux forces d'inertie, la poudre est de nouveau entrainer en rotation par la paroi latérale de la trémie. Le sens de rotation du conteneur est alors de nouveau inversé pour conserver l'écoulement de la poudre.

De préférence, la paroi latérale de la trémie a un mouvement périodique.

L'amplitude du déplacement relatif de la poudre par rapport à la paroi latérale de la trémie est fonction de l'accélération de la paroi latérale de la trémie, de l'inertie de la poudre et du frottement entre la poudre et la paroi latérale de la trémie. Ce déplacement relatif entraine la formation de contraintes de cisaillement dans la poudre à proximité des parois qui créent une dilatance de la poudre, ce qui entraine la rupture des arches qui auraient pu se former et empêche la formation de nouvelles arches.

La fréquence de mouvement oscillant est choisie de préférence pour obtenir un écoulement permanent, i.e. le sens de rotation est inversé avant que l'écoulement ne soit interrompu par la formation d'arches.

Par exemple des fréquences entre 5 Hz et 50 Hz permettent d'avoir un écoulement permanent pour des poudres d'$UO_2$.

Il pourrait néanmoins être prévu que le sens de rotation ne soit inversé que lorsque l'arrêt de l'écoulement est détecté, dans ce cas un capteur d'écoulement, par exemple optique, renseignerait les moyens de déplacement.

Dans le cas d'une poudre s'écoulant naturellement, il peut être prévu d'appliquer à la trémie un mouvement rotatif oscillant qui a pour effet d'augmenter le débit de vidange de la poudre.

La présente invention met en oeuvre un mouvement rotatif qui engendre sur les particules des forces dirigées très majoritairement tangentiellement par rapport à la surface de révolution qui provoque l'apparition d'un cisaillement intense dans une zone proche de la paroi, contrairement aux forces provoquées par la mise en oeuvre des ultrasons ou d'un système de type pic vert qui sont, elles, principalement normales à la surface. Dans le cas d'un mouvement rotatif oscillant, l'épaisseur affectée par le cisaillement est avantageusement beaucoup plus faible que celle qui l'est lorsque qu'un système de type pic vert est employé. Ce faible volume de cisaillement présente l'avantage de ne pas permettre à la poudre de se densifier notablement contrairement à ce qui se passe sous l'effet des vibrations provoquées par un système de type pic vert. On évite ainsi de compacter la poudre et donc de défavoriser l'écoulement.

Les moyens de déplacement 12 en rotation peuvent être formés par un moteur indexé en position dont l'arbre est coaxial à l'axe de la trémie et est solidarisé en rotation à des moyens de suspension de la trémie. Les moyens de suspension sont alors en prise directe sur l'arbre du moteur. Ainsi une mise en rotation de l'arbre provoque un déplacement en rotation de la trémie. Le moteur est commandé par les moyens de commande en accélération ou en vitesse et en amplitude de déplacement angulaire dans le cas du transfert de poudres ne s'écoulant pas naturellement.

Les moyens de commande sont formés par exemple par un ordinateur comportant les programmes de commande du moteur, le programme de commande est choisi en fonction de la poudre ou du mélange de poudre à transmettre. L'ordinateur peut par exemple être connecté à une source d'alimentation du moteur.

Le dispositif de transfert de poudre peut être utilisé pour alimenter par exemple le ou les moules de presse d'un dispositif de fabrication d'éléments de combustible nucléaire.

Un tel dispositif de fabrication d'éléments de combustible nucléaire est représenté schématiquement sur la figure 4. Il comporte une presse 27 munie d'une table 28 dans laquelle est réalisé au moins un moule 30, de préférence plusieurs moules. Dans l'exemple représenté, l'extrémité d'évacuation de la trémie 2 est ouverte pour remplir le moule 30 et est obturée directement par la surface de la table lors de compaction de la poudre et l'éjection de la poudre compactée. L'extrémité d'évacuation glisse sur la table 28 et lorsqu'elle se trouve en regard du moule, celle-ci est ouverte. Grâce à l'invention, la poudre s'écoule instantanément dans le moule 30 avec un débit sensiblement constant. La poudre est ensuite compactée. Ainsi il est possible d'obtenir un remplissage homogène du moule à chaque étape de remplissage et d'obtenir des pastilles dont les caractéristiques sont sensiblement identiques. Le retard à l'écoulement observé généralement lors du remplissage des matrices de presse est supprimé, la vitesse d'écoulement est augmentée et la quantité de matière versée dans le moule est homogène dans toute la hauteur du moule grâce au débit massique qui est constant. L'invention permet d'augmenter non seulement les cadences de production en diminuant le temps de remplissage mais aussi la qualité du produit après compaction puisque celle-ci est fonction pour partie de l'homogénéité de la matière obtenue après remplissage.

Les deux modes de réalisation s'appliquent au remplissage de moules pour la fabrication de pastilles de combustible nucléaire.

De préférence, la mise en rotation de la paroi latérale commence préalablement à une série de remplissages de moules afin d'être sûr que la poudre s'écoulera dès que l'extrémité d'évacuation sera ouverte.

Dans l'exemple décrit, l'élément contenant la poudre à vidanger est une trémie, mais il peut s'agir de manière plus générale d'un conteneur destiné à contenir de la poudre que l'on souhaite vidanger, le conteneur étant destiné à être rempli alors qu'il est en place dans le dispositif de transfert, comme une trémie ou le conteneur étant préalablement rempli puis mis en place dans le dispositif de transfert et auquel les moyens de déplacement 12 appliquent un mouvement rotatif selon l'invention.

Le dispositif de transfert de poudre selon l'invention est adapté au transfert de tout type de poudre dans tous les domaines d'activité mettant en oeuvre de la poudre.

**Revendications**

1. Dispositif de transfert d'une poudre donnée ou d'un mélange de poudres données, le dispositif de transfert comportant une trémie (2) destinée à contenir la poudre donnée ou le mélange de poudres données, ladite trémie (2) comportant une paroi latérale (8) et au moins un orifice de vidange (6), ladite trémie (2) étant de forme axisymétrique et ayant un axe de révolution (X) sensiblement vertical, ladite trémie étant disposée de sorte que son orifice de vidange (6) soit situé dans une partie inférieure de ladite trémie (2), le dispositif de transfert comportant des moyens de déplacement en rotation (12) de la trémie (2) autour de son axe de révolution (X), sur lequel se situe l'orifice de vidange (6), et des moyens de commande (CU) des moyens de déplacement en rotation (12) tels que les moyens de déplacement en rotation (12) imposent à au moins une partie de la paroi latérale (8) de la trémie, dite partie mobile, une première phase de déplacement dans laquelle une accélération supérieure ou égale à une accélération minimale

($a_{min}$) apte à provoquer le glissement de la poudre donnée ou du mélange de poudres données par rapport à la partie mobile est appliquée à la partie mobile.

2. Dispositif de transfert selon la revendication 1, dans lequel l'accélération minimale ($a_{min}$) est supérieure ou égale au produit du coefficient de frottement statique, de la force exercée par la poudre sur la paroi latérale de la trémie et du rayon de la trémie divisé par le moment d'inertie de la poudre.

3. Dispositif de transfert selon la revendication 1 ou 2, dans lequel les moyens de commande (CU) commandent les moyens de déplacement en rotation (12) de sorte que, lors d'une deuxième phase après la première phase, ils maintiennent le déplacement en rotation de la partie mobile dans un sens de rotation donné.

4. Dispositif de transfert selon la revendication 3, dans lequel les moyens de commande (CU) sont tels que les moyens de déplacement en rotation (12) déplacent la partie mobile à vitesse constante pendant la deuxième phase.

5. Dispositif de transfert selon la revendication 1 ou 2, dans lequel les moyens de commande (CU) sont tels que les moyens de déplacement en rotation imposent à la partie mobile une succession de premières phases séparées par des phases à vitesse faible ou nulle.

6. Dispositif de transfert selon la revendication 5, dans lequel les moyens de commande sont tels que les moyens de déplacement en rotation (12) imposent un déplacement de la partie mobile de sorte que son sens de rotation est inversé entre deux premières phases successives, de sorte à imposer un mouvement rotatif oscillant.

7. Dispositif de transfert selon la revendication 6, dans lequel le mouvement rotatif oscillant est périodique, le mouvement rotatif oscillant ayant avantageusement une fréquence comprise entre 5 Hz et 50 Hz.

8. Dispositif de transfert selon l'une des revendications 1 à 7, comportant des moyens d'étanchéité dynamique entre la partie mobile et des parties fixes du dispositif de transfert.

9. Dispositif de transfert selon l'une des revendications 1 à 8, dans lequel la trémie est formée par un conteneur amovible.

10. Dispositif de fabrication d'éléments de combustible nucléaire comportant un dispositif de transfert de poudre selon l'une des revendications 1 à 9, une presse (27) munie d'une table (28) dans laquelle au moins un moule (30) est formé et des moyens pour compresser la poudre dans le moule, l'orifice de vidange (6) de la trémie (2) étant apte à être mise en regard dudit moule (30) lors d'une phase de remplissage du moule (30) et à être obturée en dehors d'une phase de remplissage.

11. Procédé de transfert d'une poudre donnée ou d'un mélange de poudres données mettant en oeuvre le dispositif de transfert selon l'une des revendications 1 à 9, le procédé comportant au moins l'étape:

a) mise en rotation d'une partie au moins de la paroi latérale de la trémie autour d'un axe sur lequel se trouve l'orifice de vidange avec une accélération supérieure à une accélération minimale provoquant le glissement de la poudre déterminée par rapport à la paroi latérale.

12. Procédé de transfert selon la revendication 11, dans lequel l'accélération minimale ($a_{min}$) est supérieure ou égale au produit du coefficient de frottement statique, de la force exercée par la poudre sur la paroi latérale de la trémie et du rayon de la trémie divisé par le moment d'inertie de la poudre.

13. Procédé de transfert selon la revendication 11 ou 12, comportant une étape ultérieure b) de maintien du mouvement de rotation de la paroi latérale dans un sens de rotation donné.

14. Procédé de transfert selon la revendication 13, dans lequel lors de l'étape b), le mouvement de rotation se fait à vitesse constante ou dans lequel des étapes a) sont répétées successivement séparées par des étapes à vitesse nulle ou faible.

15. Procédé de transfert selon la revendication 14, dans lequel le sens de rotation est inversé entre deux étapes a) successives, avantageusement de manière périodique.

**Patentansprüche**

1. Vorrichtung zum Transferieren eines gegebenen Pulvers oder einer gegebenen Pulvermischung, wobei die Vorrichtung zum Transferieren einen Trichter (2) umfasst, welcher dazu vorgesehen ist, das gegebene Pulver oder die gegebene Pulvermischung aufzunehmen, wobei der Trichter (2) eine laterale Wand (8) und wenigstens eine Abgabeöffnung (6) umfasst, wobei der Trichter (2) von einer achsensymmetrischen Form ist und eine im Wesentlichen vertikale Drehachse (X) aufweist, wobei der Trichter derart angeordnet ist, dass seine Abgabeöffnung (6) in einem unteren Abschnitt des Trichters (2) positioniert ist, wobei die Vorrichtung zum Transferieren Mittel zum Verlagern des Trichters (2) in Rotation (12) um seine Drehachse (X) umfasst, auf welcher sich die Abgabeöffnung (6) befindet, sowie Steuerungsmittel (CU) für die Mittel zum Verlagern in Rotation (12) derart, dass die Mittel zum Verlagern in Rotation (12) auf wenigstens einen Teil der lateralen Wand (8) des Trichters, als beweglicher Teil bezeichnet, eine erste Verlagerungsphase einwirken, wobei eine Beschleunigung größer oder gleich einer minimalen Beschleunigung (amin), welche in der Lage ist, das Abgleiten des gegebenen Pulvers oder der gegebenen Pulvermischung gegenüber dem beweglichen Teil hervorzurufen, auf den beweglichen Teil eingewirkt wird.

2. Vorrichtung zum Transferieren nach Anspruch 1, wobei die minimale Beschleunigung ($a_{min}$) größer oder gleich dem Produkt des Haftreibungskoeffizienten, der durch das Pulver auf die laterale Wand des Trichters eingewirkten Kraft und des Radius des Trichters, geteilt durch das Trägheitsmoment des Pulvers, ist.

3. Vorrichtung zum Transferieren nach Anspruch 1 oder 2, wobei die Steuerungsmittel (CU) die Mittel zum Verlagern in Rotation (12) derart steuern, dass sie während einer zweiten Phase nach der ersten Phase das Verlagern in Rotation des beweglichen Teils in einem gegebenen Rotationssinn beibehalten.

4. Vorrichtung zum Transferieren nach Anspruch 3, wobei die Steuerungsmittel (CU) derart sind, dass die Mittel zum Verlagern in Rotation (12) den beweglichen Teil mit einer konstanten Geschwindigkeit während der zweiten Phase verlagern.

5. Vorrichtung zum Transferieren nach Anspruch 1 oder 2, wobei die Steuerungsmittel (CU) derart sind, dass die Mittel zum Verlagern in Rotation auf den beweglichen Teil eine Abfolge von ersten Phasen, getrennt durch Phasen mit niedriger Geschwindigkeit oder Geschwindigkeit null, einwirken.

6. Vorrichtung zum Transferieren nach Anspruch 5, wobei die Steuerungsmittel derart sind, dass die Mittel zum Verlagern in Rotation (12) eine Verlagerung des beweglichen Teils derart einwirken, dass sein Rotationssinn zwischen zwei aufeinanderfolgenden ersten Phasen umgekehrt wird, derart, dass eine oszillierende Rotationsbewegung eingewirkt wird.

7. Vorrichtung zum Transferieren nach Anspruch 6, wobei die oszillierende Rotationsbewegung periodisch ist, wobei die oszillierende Rotationsbewegung vorzugsweise eine Frequenz aufweist, welche zwischen 5Hz und 50Hz beträgt.

**8.** Vorrichtung zum Transferieren nach einem der Ansprüche 1 bis 7, umfassend dynamische Dichtungsmittel zwischen dem beweglichen Teil und den festen Teilen der Vorrichtung zum Transferieren.

**9.** Vorrichtung zum Transferieren nach einem der Ansprüche 1 bis 10, wobei der Trichter durch einen entfernbaren Behälter gebildet ist.

**10.** Vorrichtung zum Herstellen von Elementen aus Kernbrennstoff, umfassend eine Vorrichtung zum Transferieren von Pulver nach einem der Ansprüche 1 bis 9, eine Presse (27), welche mit einem Tisch (28) bereitgestellt ist, auf welchem wenigstens eine Form (30) gebildet ist, sowie mit Mitteln zum Komprimieren des Pulvers in der Form, wobei die Abgabeöffnung (6) des Trichters (2) dazu in der Lage ist, während einer Phase eines Füllens der Form (30) gegenüber der Form (30) platziert zu sein und außerhalb einer Phase eines Füllens verschlossen zu sein.

**11.** Verfahren zum Transferieren eines gegebenen Pulvers oder einer gegebenen Pulvermischung, welches die Vorrichtung zum Transferieren nach einem der Ansprüche 1 bis 9 umsetzt, wobei das Verfahren wenigstens den Schritt umfasst eines:

a) Versetzens in Rotation eines Teils von wenigstens der lateralen Wand des Trichters um eine Achse, auf welcher sich die Abgabeöffnung befindet, mit einer Beschleunigung größer einer minimalen Beschleunigung, welche das Abgleiten des vorbestimmten Pulvers gegenüber der lateralen Wand hervorruft.

**12.** Verfahren zum Transferieren nach Anspruch 11, wobei die minimale Beschleunigung ($a_{min}$) größer oder gleich dem Produkt des Haftreibungskoeffizienten, der von dem Pulver auf die laterale Wand des Trichters ausgeübten Kraft und des Radius des Trichters, geteilt durch das Trägheitsmoment des Pulvers, ist.

**13.** Verfahren zum Transferieren nach Anspruch 11 oder 12, umfassend einen späteren Schritt b) eines Aufrechterhaltens der Rotationsbewegung der lateralen Wand in einem gegebenen Rotationssinn.

**14.** Verfahren zum Transferieren nach Anspruch 13, wobei während des Schritts b) die Rotationsbewegung mit konstanter Geschwindigkeit durchgeführt wird oder wobei Schritte a) wiederholt durchgeführt werden, getrennt durch Schritte mit Geschwindigkeit null oder niedriger Geschwindigkeit.

**15.** Verfahren zum Transferieren nach Anspruch 14, wobei der Rotationssinn zwischen zwei aufeinanderfolgenden Schritten a) umgekehrt wird, vorzugsweise in periodischer Weise.

## Claims

**1.** Device for transferring a given powder or a mixture of given powders, the transfer device comprising a hopper (2) intended to contain the given powder or the mixture of given powders, said hopper (2) comprising a side wall (8) and at least one discharge opening (6), said hopper (2) having a axisymmetric shape and having a substantially vertical axis of revolution (X), said hopper being arranged such that its discharge opening (6) is located in a lower portion of said hopper(2), the transfer device comprising means (12) for displacing the hopper (2) in rotation about its axis of revolution (X), whereon the discharge opening (6) is located, and control means (CU) of the means for displacing in rotation (12) such that the means for displacing in rotation (12) impose on at least one portion of the side wall (8) of the hopper, referred to as movable portion, a first moving phase wherein an acceleration greater than or equal to a minimum acceleration ($a_{min}$) capable of causing the given powder or mixture of given powders to slide relative to the movable portion is applied to the movable portion.

**2.** Transfer device according to claim 1, wherein the minimum acceleration ($a_{min}$) is greater than or equal to the product of the coefficient of static friction, of the force exerted by the powder on the side wall of the container and of the radius of the container divided by the moment of inertia of the powder.

**3.** Transfer device according to claim 1 or 2, wherein the control means (CU) control the means for displacing in rotation (12) such that, during a second phase after the first phase, they maintain the movement in rotation of the movable portion in a given direction of rotation.

**4.** Transfer device according to claim 3, wherein the control means (CU) are such that the means for displacing in rotation (12) displace the movable portion at a constant speed during the second phase.

**5.** Transfer device according to claim 1 or 2, wherein the control means (CU) are such that means for displacing in rotation impose on the movable portion a succession of first phases separated by phases at low or zero speed.

**6.** Transfer device according to claim 5, wherein the control means are such that the means for displacing in rotation (12) impose a displacement of the movable portion such that its direction of rotation is inverted between two successive first phases, in such a way as to impose an oscillating rotating movement.

**7.** Transfer device according to claim 6, wherein the oscillating rotating movement is periodical, the oscillating rotating movement having advantageously a frequency between 5 Hz and 50 Hz.

**8.** Transfer device according to one of claims 1 to 7, comprising means of dynamic sealing between the movable portion and the fixed portions of the transfer device.

**9.** Transfer device according to one of claims 1 to 8, wherein the hopper is formed by a removable container.

**10.** Device for manufacturing nuclear fuel elements comprising a device for transferring powder according to one of claims 1 to 9, a press (27) provided with a table (28) wherein at least one mould (30) is formed and means for compressing the powder in the mould, with the emptying end (6) of the container (2) able to be placed facing said mould (30) during a filling phase of the mould (30) and able to be sealed off outside of a filling phase.

**11.** Method for transferring a given powder or a mixture of given powders that implements the transfer device according to one of claims 1 to 9, with the method comprising at least the step of:

a) setting into rotation a portion at least of the side wall of the container about an axis whereon the discharge opening is located with an acceleration greater than a minimum acceleration causing the sliding of the determined powder with respect to the side wall.

**12.** Method for transferring according to claim 11, wherein the minimum acceleration ($a_{min}$) is greater than or equal to the product of the coefficient of static friction, of the force exerted by the powder on the side wall of the container and of the radius of the container divided by the moment of inertia of the powder.

**13.** Method for transferring according to claim 11 or 12, comprising a later step b) of maintaining the rotation movement of the side wall in a given direction of rotation.

**14.** Method for transferring according to claim 13, wherein during the step b), the movement of rotation is carried out at a constant speed, or wherein the steps a) are repeated successively separated by steps at a low or constant speed.

**15.** Method for transferring according to claim 14, wherein the direction of rotation is inverted between two successive steps a), advantageously periodically.

FIG.1

FIG.2

FIG.3

FIG.4

**RÉFÉRENCES CITÉES DANS LA DESCRIPTION**

**Documents brevets cités dans la description**

- US 2014048172 A